# EUROPÄISCHE PATENTSCHRIFT

(11) **EP 1 407 174 B1**
(45) Veröffentlichungstag und Bekanntmachung des Hinweises auf die Patenterteilung: **22.08.2007**
(21) Anmeldenummer: 02767162.7
(22) Anmeldetag: 02.07.2002
(51) Int. Cl.: F16K 1/08

(54) **HUBVENTIL**
GATE VALVE
ROBINET-VANNE

(30) Priorität: 14.07.2001 DE 20111721 U
(43) Veröffentlichungstag der Anmeldung: 14.04.2004
(73) Patentinhaber: ARI-ARMATUREN ALBERT RICHTER GmbH & Co.KG., 33758 Schloss Holte-Stukenbrock (DE)
(72) Erfinder: Lüke, Heinz, 33758 Schloss Holte-Stukenbrock (DE); Unruh, Roland, 31787 Hameln (DE)
(74) Vertreter: Dantz, Jan Henning
(86) Internationale Anmeldenummer: PCT/EP2002/007254
(87) Internationale Veröffentlichungsnummer: WO 2003/008846

(56) Entgegenhaltungen:
- EP-A- 0 473 119
- DE-A- 19 733 544
- DE-U- 8 909 262
- FR-A- 1 008 132
- GB-A- 2 271 164
- US-A- 5 143 350

## Beschreibung

Die vorliegende Erfindung betrifft ein Hubventil gemäß dem Oberbegriff des Anspruchs 1.

Ein derartige Ventil ist aus der Druckschrift DE 19733544 bereits bekannt.

Derartige Hubventile finden in vielen Anwendungsbereichen Verwendung. Gegenüber bspw. Klappen besitzen sie erhebliche Vorteile, insbesondere hinsichtlich der Dichtigkeit, der Regelbarkeit und der Standzeit.

So ist beispielsweise bei häufigerem Gebrauch, also bei einem vielfachen Absperren bei Klappen die Dichtfläche zwischen dem Verschlußstück und dem Ventilsitz einer Abnutzung unterworfen, die zu einer Beeinträchtigung der Funktionsfähigkeit führt und bauartbedingt nur durch ein Auswechseln von Dichtelementen zu beheben ist.

Demgegenüber können die Dichtigkeit des Ventilsitzes bzw. des Verschlußstückes beeinträchtigende Abnutzungen bei einem Hubventil zu einem erheblichen Teil dadurch ausgeglichen werden, daß ein erhöhter Druck mittels der Ventilspindel auf das Verschlußstück gebracht wird, wodurch eine bessere Anpressung an den Ventilsitz erfolgt.

Die Regelbarkeit des Hubventiles ist insbesondere durch die Form des Verschlußstückes besser als bei einer Klappe. Dies vor allem deshalb, weil die Klappenscheibe der Klappe um eine vertikale Achse geschwenkt und bereits bei geringer Schwenkung einen großen Durchflußquerschnitt frei gibt. Hierdurch kann es überdies zu Druckschlägen (Wasserschlägen) in der Anlagenverrohrung kommen.

Allerdings zeichnen sich Klappen ebenso wie Schieber oder ähnliche Armaturen durch eine sehr kurze Baulänge aus, was für viele Einsatzgebiete wünschenswert ist.

Der vorliegenden Erfindung liegt die Aufgabe zugrunde, ein Hubventil der gattungsgemäßen Art so auszubilden, daß seine Verwendungfähigkeit verbessert wird.

Diese Aufgabe wird durch ein Hubventil gelöst, das die Merkmale des Anspruchs 1 aufweist.

Durch diese konstruktive Ausgestaltung eines Hubventils besteht nun die Möglichkeit, diese auch dort einzusetzen, wo bislang nur Klappen, Schieber oder Kugelhähne Verwendung finden konnten. Dies erlaubt naturgemäß einen erheblich grö-ßeren Anwendungsbereich der Hubventile als bisher.

Darüber hinaus können bereits montierte Klappen jeweils durch ein im Sinne der Erfindung ausgebildetes Hubventil problemlos ersetzt werden.

Insbesondere die im Verhältnis zum Nenndurchmesser sehr geringe Baulänge erlaubt nun einen optimierten Einsatz des Hubventiles.

Dabei ist die Konfiguration des Ventilsitzes und des in Absperrstellung daran anliegenden Verschlußstückes entscheidend. Hier kommt es insbesondere auf die Schrägstellung des Ventilsitzes, d. h. der Sitzfläche an, an der das Verschlußstück, vielfach mit einer elastischen Dichtung belegt, umlaufend anliegt.

Nach einer vorteilhaften Weiterbildung der Erfindung ist vorgesehen, daß die Sitzfläche des Ventilsitzes umlaufend so geneigt ist, daß die Schnittpunkte der sich jeweils diametral gegenüberliegenden Mantellinien, durch die der Ventilsitz definiert ist, eine Fläche einschließen.

Wie sich überraschend gezeigt hat, ist diese Ausführung in besonderer Weise geeignet, die Merkmale des Anspruchs 1 zu realisieren, bei Optimierung der Dichtigkeit einerseits und des Strömungswiderstandes andererseits.

Hinzu kommt, daß ein in dieser Art ausgebildetes Hubventil besonders preiswert herstellbar ist und insoweit keine Nachteile gegenüber den preisgünstigen Klappen darstellt, so daß dieses neue Hubventil durchaus als gleichwertiger Ersatz in weiten Bereichen für eine Klappe angesehen werden kann.

Gemäß der Erfindung ist die Spindel, je nach Schrägstellung des Ventilsitzes außermittig angelenkt ist, was ebenfalls zu einer Optimierung des neuen Ventiles beiträgt.

Weitere vorteilhafte Ausbildungen der Erfindung sind in den Unteransprüchen gekennzeichnet.

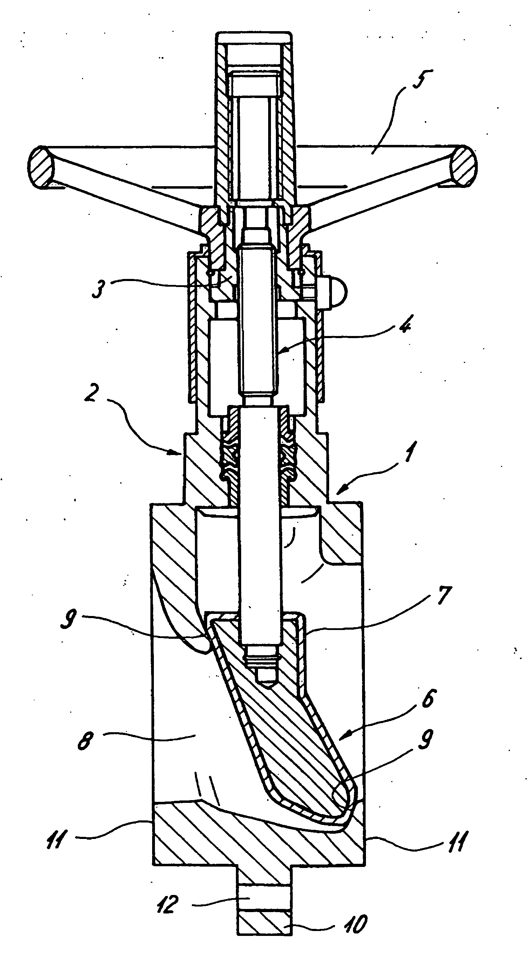

Ein Ausführungsbeispiel der Erfindung wird nachfolgend anhand der beigefügten Zeichnung beschrieben.

Die einzige Figur zeigt ein erfindungsgemäßes Hubventil in einer geschnittenen Seitenansicht.

In der Figur ist ein Hubventil dargestellt, das ein Ventilgehäuse 1 aufweist, an das sich ein Gehäusehals 2 anschließt, in dem eine Spindelmutter 3 drehbar, jedoch axial gesichert, gelagert ist.

Mit der Spindelmutter 3 ist ein Handrad 5 fest verbunden, über das die Spindelmutter 3 bewegbar ist.

In der Spindelmutter 3 ist eine axial verstellbare Ventilspindel 4 geführt, deren Außengewinde das Innengewinde der Spindelmutter 3 kämmt, wodurch bei Drehung des Handrades 5 die axiale Bewegung der Ventilspindel 4 bewirkt wird.

Das Ventilgehäuse 1 weist zwei sich gegenüberliegende, parallel zueinander verlaufende Stirnflächen 11 auf, die zwischen zwei nicht dargestellte Rohrleitungsenden einklemmbar sind, wobei die Stirnflächen 11 dann an Flanschen der Rohrleitungsenden anliegen. Durch Schrauben sind die Flansche der Rohrleitungsenden miteinander verbunden. Dabei werden diese Schrauben durch Bohrungen 12 geführt, die in einem gehäuseseitigen Flansch 10 des Ventilgehäuses 1 vorgesehen sind. Dieser Flansch 10 ist, bezogen auf die Baulänge des Ventilgehäuses 1, etwa mittig angeordnet.

Mittels der Schrauben, die, wie erwähnt, durch die Bohrungen 12 geführt sind, wird das Hubventil zwischen den Rohrenden zentriert und geklemmt.

Anstelle von Bohrungen 12, die Durchgangsbohrungen bilden, können Gewindebohrungen vorgesehen sein, in die Schrauben eindrehbar sind, die durch Durchgangsbohrungen von Rohrleitungsflanschen führbar sind und mittels derer das Hubventil dann fest mit den Rohrleitungen verbunden ist.

Weiter weist das Ventilgehäuse 1 eine Durchflußleitung 8 auf, durch die ein durch die besagten Rohre strömendes Medium führbar ist.

Zur Absperrung des Durchflusses ist ein schräg angeordneter Ventilsitz 9 im Ventilgehäuse 1 vorgesehen, der eine umlaufende Sitzfläche aufweist, an der ein Verschlußstück 6 dichtend anlegbar ist, wobei das Verschlußstück 6 mit einer elastischen Dichtung 7 belegt ist.

Die Ventilspindel 4 ist verdrehsicher an dem Verschlußstück 6 angebunden, so daß bei Drehung des Handrades 5 und dadurch der Spindelmutter 3 die Ventilspindel 4 sich axial bewegt sowie gleichgerichtet das Verschlußstück 6.

Erfindungsgemäß entspricht das Ventilgehäuse 1 in seiner Nennweite, also dem Durchmesser der Durchflußleitung 8, am Eingang und am Ausgang der Baulänge, d. h. dem Abstand zwischen den beiden parallelen Stirnseiten 11, den durch die Normen für Armaturen, insbesondere für Klappen oder Kugelhähne, in Einklemmausführung definierten Abmessungen. Beispielhaft sei auf die europäische Norm EN 558-1, Grundreihe 16, verwiesen, bei der bei einem Nenndurchmesser DN = 100 mm eine Baulänge von 64 mm angegeben ist. Bei gleichem Nenndurchmesser ist die Baulänge in der genannten Norm in Grundreihe 20 52 mm. Wie erkennbar ist in jedem Fall die Baulänge deutlich kürzer als der Nenndurchmesser.

## Patentansprüche

1. Hubventil, mit einem Ventilgehäuse (1) in Einklemmausführung, das eine Durchflussleitung (8) aufweist, die über ein mittels einer axial verstellbaren Ventilspindel (4) betätigbares Verschlussstück (6) absperrbar ist, wobei das Verschlussstück (6) in Absperrstellung an einem schräg zur Durchflussrichtung angeordneten Ventilsitz (9) dichtend anliegt, wobei die Ventilspindel (4), je nach Schrägstellung des Ventilsitzes (9) außermittig an dem Verschlußstück (6) angelenkt ist, **dadurch gekennzeichnet, dass** das Ventilgehäuse in seiner Nennweite und seiner Baulänge den durch die Norm für Klappen, Schieber oder Kugelhähne in Einklemmausführung definierten Abmessungen entspricht.

2. Hubventil nach Anspruch 1, bei dem das Ventilgehäuse einen Flansch (10) aufweist, **dadurch gekennzeichnet, daß** der Flansch (10) mit Gewindebohrungen versehen ist, in die durch Rohrleitungsflansche geführte Schrauben eindrehbar sind.

3. Hubventil nach Anspruch 1, bei dem das Ventilgehäuse einen Flansch (10) aufweist, durch den Schrauben führbar sind, mit denen Rohrleitungsflansche miteinander verbindbar sind, **dadurch gekennzeichnet, daß** der Flansch (10), bezogen auf die Baulänge, etwa mittig angeordnet ist.

4. Hubventil nach Anspruch 1, **dadurch gekennzeichnet, daß** die Sitzfläche des Ventilsitzes (9) umlaufend so geneigt ist, daß die Schnittpunkte der sich jeweils diametral gegenüberliegenden Mantellinien eine Fläche einschließen.

## Claims

1. Gate valve, with a valve housing (1) of wafer-type design, which has a flow line (8) which can be obstructed by a closure member (6) actuable by means of an axially displaceable valve stem (4), wherein, in the obstructed position, the closure member (6) is in tight contact with a valve seat (9) arranged at an inclination relative to the flow direction, and wherein, depending on the inclination of the valve seat (9), the valve stem (4) is coupled eccentrically to the closure member (6), **characterized in that** the nominal width and overall length of the valve housing correspond to the dimensions defined by the standards relating to flaps, slide valves or ball valves of wafer-type design.

2. Gate valve according to Claim 1, in which the valve housing has a flange (10), **characterized in that** the flange (10) is provided with threaded bores into which screws guided through pipeline flanges can be screwed.

3. Gate valve according to Claim 1, in which the valve housing has a flange (10) through which screws can be guided, with which pipeline flanges can be connected to one another, **characterized in that** the flange (10) is arranged approximately centrally, with respect to the overall length.

4. Gate valve according to Claim 1, **characterized in that** the seat surface of the valve seat (9) is inclined peripherally in such a manner that the intersecting points of the respectively diametrically opposite surface lines enclose a surface.

## Revendications

1. Robinet-vanne comprenant une cage de soupape (1) à raccords rapides, présentant une conduite d'écoulement (8) susceptible d'être fermée par un obturateur (6) actionnable au moyen d'une tige de soupape (4) déplaçable axialement, l'obturateur (6), en position d'obturation, reposant de façon étanche sur un siège de soupape (9) monté de façon inclinée par rapport à la direction d'écoulement, la tige de soupape (4), en fonction de l'inclinaison du siège de soupape (9), étant articulée de façon excentrée sur l'obturateur (6), **caractérisée en ce que** la largeur nominale et la longueur d'encombrement de la cage de soupape correspondent aux dimensions définies par les normes s'appliquant aux clapets, robinets-vannes ou robinets à boisseaux sphériques à raccords rapides.

2. Robinet-vanne selon la revendication 1, dans laquelle la cage de soupape présente une bride (10), **caractérisée en ce que la** bride (10) est pourvue de perçages filetés dans lesquels peuvent être vissées des vis ayant traversé des brides de canalisations.

3. Robinet-vanne selon la revendication 1, dans laquelle la cage de soupape présente une bride (10) à travers laquelle peuvent passer des vis permettant d'assembler des brides de canalisations, **caractérisée en ce que** la bride (10), par rapport à la longueur hors tout, est disposée approximativement au centre.

4. Robinet-vanne selon la revendication 1, **caractérisée en ce que** la surface du siège de soupape (9) est inclinée, sur son pourtour, de telle sorte que les points d'intersection des génératrices qui sont diamétralement opposées encerclent une surface.
